# EUROPÄISCHE PATENTSCHRIFT

(11) **EP 3 744 933 B1**
(45) Veröffentlichungstag und Bekanntmachung des Hinweises auf die Patenterteilung: **28.09.2022**
(21) Anmeldenummer: 20173849.9
(22) Anmeldetag: 11.05.2020
(51) Int. Cl.: E05B 67/38, B25B 5/10, F16K 35/10

(54) **SICHERUNGSVORRICHTUNG ZUR SICHERUNG EINES VENTILHEBELS IN EINER EINGESTELLTEN STELLUNG**
SAFETY DEVICE FOR SECURING A VALVE LEVER IN A SET POSITION
DISPOSITIF DE FIXATION POUR FIXER UN LEVIER DE SOUPAPE DANS UNE POSITION RÉGLÉE

(30) Priorität: 28.05.2019 DE 102019114349
(43) Veröffentlichungstag der Anmeldung: 02.12.2020
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- CN-U- 204 533 777
- US-A- 5 300 740

## Beschreibung

Die Erfindung betrifft eine Sicherungsvorrichtung zur Sicherung eines Ventilhebels in einer grundsätzlich beliebigen eingestellten Stellung. Eine Sicherungsvorrichtung gemäß dem Oberbegriff des Anspruchs 1 ist aus US 5,300,740 A bekannt. Eine ähnliche Sicherungsvorrichtung wird zudem in CN 204 533 777 U offenbart.

In Systemen, in denen von einer Fehlstellung eines Betätigungselements, wie z.B. eines Ventilhebels, eine Gefahr ausgehen kann, ist es wichtig sicherzustellen, dass eine korrekt eingestellte Stellung des Betätigungselements nicht versehentlich oder in unbefugter Weise verstellt wird. Dies kann in besonderem Maße für Ventilhebel gelten, mittels welcher beispielsweise eine Gasfördermenge eingestellt werden kann. Nach Einstellen einer geeigneten Stellung des Ventilhebels, insbesondere nach Schließen des Ventilhebels, ist es daher zweckmäßig, die eingestellte Stellung des Ventilhebels mittels einer Sicherungsvorrichtung gegen ein Verstellen zu sichern.

Das Sichern kann darin bestehen, dass der Ventilhebel in der eingestellten Stellung blockiert wird, so dass er nicht ohne Lösen der Sicherungsvorrichtung verstellt werden kann. Grundsätzlich kann aber auch schon lediglich eine zuverlässige, insbesondere nicht einfach entfernbare, Kennzeichnung des Ventilhebels, anhand welcher eindeutig zu erkennen ist, dass von einem Verstellen des Ventilhebels aus der eingestellten Stellung eine Gefahr ausgehen kann, ein Sichern des Ventilhebels darstellen.

Zum Zweck des Sicherns eines Ventilhebels in einer eingestellten Stellung kann eine Sicherungsvorrichtung vorgesehen sein, die unmittelbar an dem Ventilhebel befestigt wird. Dabei ist die Befestigung vorteilhafterweise derart, dass sie sich nicht ohne weiteres lösen lässt. Beispielsweise kann zum Lösen der Sicherungsvorrichtung die Kenntnis oder das Verfügen über ein Schließgeheimnis erforderlich sein, z.B. die Kenntnis eines Codes oder das Verfügen über einen Schlüssel.

Wenn die Sicherungsvorrichtung an dem Ventilhebel befestigt ist, kann bereits dadurch ein Verstellen des Ventilhebels blockiert sein. Das kann beispielsweise dadurch der Fall sein, dass die an dem Ventilhebel befestigte Sicherungsvorrichtung bei einem Versuch, den Ventilhebel zu verstellen, an einem feststehenden Objekt anschlägt, woran der Ventilhebel ansonsten, d.h. wenn die Sicherungsvorrichtung nicht daran befestigt wäre, vorbeigeführt werden könnte.

In der Regel ist es aber zweckmäßig, dass die Sicherungsvorrichtung nicht nur an dem beweglichen Ventilhebel befestigt, sondern zugleich auch noch an einem feststehenden Objekt verankert werden kann - beispielsweise über ein Kabel, das dann verhindert, dass die Sicherungsvorrichtung weiter als ein durch die Länge des Kabels definierter Abstand von dem jeweiligen Verankerungspunkt entfernt werden kann. Grundsätzlich ist es auch denkbar, dass sich die Sicherungsvorrichtung an einem feststehenden Objekt abstützt oder direkt daran befestigt ist. Die Beweglichkeit der Sicherungsvorrichtung kann auf diese Weise derart eingeschränkt sein, dass dadurch der Ventilhebel, an dem die Sicherungsvorrichtung befestigt ist, an einer Bewegung aus seiner eingestellten Stellung heraus gehindert wird.

Dabei ist es jeweils wichtig, dass die Sicherungsvorrichtung besonders zuverlässig an dem Ventilhebel befestigt ist. Dazu ist die Sicherungsvorrichtung vorteilhafterweise in an dem Ventilhebel befestigtem Zustand verriegelbar. Mit anderen Worten kann die Sicherungsvorrichtung dazu ausgebildet sein, im am Ventilhebel befestigten Zustand so verriegelt zu werden, dass sie nicht oder nur mit Gewalt von dem Ventilhebel gelöst werden kann.

Eine solche Verriegelung ist aber nur dann effektiv, wenn die Sicherungsvorrichtung auch einen zuverlässigen Halt an dem Ventilhebel aufweist. Dazu kann die Sicherungsvorrichtung an die Form eines jeweiligen Ventilhebels speziell angepasst sein, um, etwa durch eine komplementäre Ausbildung, möglichst formschlüssig daran zu halten. Der Nachteil einer solchen für Ventilhebel einer bestimmten Form spezifisch ausgebildeten Sicherungsvorrichtung ist jedoch naturgemäß, dass sie nicht auf für andere Ventilhebel verwendet werden kann, so dass für verschiedene Ventilhebel verschiedene Sicherungsvorrichtungen vorgesehen werden müssen.

Es ist eine Aufgabe der Erfindung, eine Sicherungsvorrichtung zur Sicherung eines (jeweiligen) Ventilhebels in einer eingestellten Stellung bereitzustellen, die möglichst universell mit einer Vielzahl verschiedener Ventilhebel verwendbar ist und dabei jeweils einen zuverlässigen Halt bei der Befestigung der Sicherungsvorrichtung an einem jeweiligen Ventilhebel bietet.

Die Aufgabe wird gelöst durch eine Sicherungsvorrichtung mit den Merkmalen des Anspruchs 1. Vorteilhafte Ausführungsformen dieser erfindungsgemäßen Sicherungsvorrichtung ergeben sich aus den Unteransprüchen, der vorliegenden Beschreibung sowie den Figuren.

Die erfindungsgemäße Sicherungsvorrichtung ist zur Sicherung eines Ventilhebels in einer eingestellten Stellung ausgebildet und umfasst einen Grundkörper, ein Gleitstück sowie ein Schraubelement, wobei der Grundkörper und das Gleitstück jeweils eine Klemmfläche aufweisen. Die beiden Klemmflächen sind dabei dazu vorgesehen, den Ventilhebel zwischen sich einzuklemmen. Mit anderen Worten wirkt die Sicherungsvorrichtung über die Klemmflächen mit dem Ventilhebel zusammen und kann durch das Einklemmen des Ventilhebels zwischen den Klemmflächen an dem Ventilhebel befestigt werden.

Um etwas zwischen den Klemmflächen einklemmen zu können, ist es zweckmä-ßig, sie relativ zueinander beweglich auszubilden. Insbesondere zu diesem Zweck, ist das Gleitstück an dem Grundkörper entlang einer Längsachse verschiebbar gelagert. Dadurch ist das Gleitstück relativ zudem Grundkörper verschiebbar.

Erfindungsgemäß ist ferner das Schraubelement an dem Grundkörper drehbar gelagert und weist ein Gewinde auf, das mit einem Gegengewinde des Gleitstücks in Eingriff steht, so dass dadurch - d.h. durch dieses Zusammenwirken des Schraubelements einerseits mit dem Grundkörper (drehbare Lagerung) und andererseits mit dem Gleitstück (Gewindeeingriff) - die Lage des Gleitstücks relativ zu dem Grundkörper entlang der Längsachse auf einen Maximalabstand zwischen den Klemmflächen beschränkt wird, der durch Drehen des Schraubelements veränderbar ist, um den Ventilhebel zwischen den Klemmflächen einzuklemmen. Die Drehachse, um die das Schraubelement drehbar gelagert ist, ist dabei vorzugsweise zu der genannten Längsachse parallel, insbesondere zu der Längsachse identisch. Um den Ventilhebel zwischen sich einklemmen zu können, sind die Klemmflächen zweckmäßigerweise entgegengesetzt aufeinander zu weisend angeordnet.

Aufgrund des gegenseitigen Eingriffs des Gewindes und des Gegengewindes kann das Gleitstück hinsichtlich seiner Lage relativ zu dem Schraubelement entlang der Längsachse in Abhängigkeit von der Drehstellung des Schraubelements festgelegt sein, d.h. dass das Gleitstück zwar durch Drehen des Schraubelements relativ zu dem Schraubelement entlang der Längsachse versetzt werden kann, ansonsten aber (wenn das Schraubelement nicht gedreht wird) relativ zu dem Schraubelement eine feste Lage einnimmt. Dagegen kann die Lagerung des Schraubelements an dem Grundkörper derart sein, dass das Schraubelement relativ zu dem Grundelement entlang der Längsachse grundsätzlich versetzbar ist, wobei diese Versetzbarkeit aber zumindest einseitig beschränkt ist, so dass das Gleitstück (gemeinsam mit dem Schraubelement) nicht über einen Maximalabstand der Klemmflächen hinaus relativ zu dem Grundkörper verschoben werden kann. Das Einklemmen eines Ventilhebels zwischen den Klemmflächen kann dann einfach durch Drehen des Schraubelements erfolgen, wodurch der Maximalabstand verringert wird, bis dieser dem Abstand der beidseitig an dem Ventilhebel anliegenden Klemmflächen entspricht, so dass die Klemmflächen nicht voneinander und von dem Ventilhebel weg bewegt werden können.

Die Lagerung des Schraubelements an dem Grundkörper kann auch derart sein, dass die Lage des Schraubelements relativ zu dem Grundkörper nicht nur einseitig beschränkt wird, sondern auch in bezüglich der Längsachse entgegengesetzter Richtung. Beispielsweise kann das Schraubelement relativ zu dem Grundkörper drehbar, aber in axialer Richtung festgelegt sein, etwa durch einen an der einen Seite des Grundkörpers anliegenden Schraubenkopf und einen an der anderen Seite anliegenden Sprengring. Dadurch ergibt sich nicht nur ein (von der Drehstellung des Schraubelements abhängiger) Maximalabstand, sondern auch ein (gegebenenfalls von der Drehstellung des Schraubelements abhängiger) Minimalabstand der zwei Klemmflächen voneinander. Insbesondere können der Maximalabstand und der Minimalabstand auch identisch sein, so dass die Lage des Gleitstücks relativ zu dem Grundkörper entlang der Längsachse in Abhängigkeit von der jeweiligen Drehstellung des Schraubelements festgelegt ist. Mit anderen Worten können die Klemmflächen dann durch Drehen des Schraubelements nicht nur aufeinander zu, sondern durch entgegengesetztes Drehen auch voneinander weg versetzt werden.

Des Weiteren ist erfindungsgemäß vorgesehen, dass in Abhängigkeit von der Drehstellung des Schraubelements eine von gegebenenfalls mehreren am Schraubelement ausgebildeten Blockieraufnahmen mit einer von gegebenenfalls mehreren am Grundkörper ausgebildeten Blockieraufnahmen fluchtet, so dass ein Blockierelement in beide Blockieraufnahmen - d.h. in die beiden gerade miteinander fluchtenden Blockieraufnahmen - eingreifen kann, insbesondere beide Blockieraufnahmen durchgreifen kann, um das Schraubelement in der entsprechenden Drehstellung - d.h. in der Drehstellung, in der die beiden Blockieraufnahmen fluchten - zu blockieren. Denn dadurch dass das Blockierelement in beide fluchtenden Blockieraufnahmen gleichzeitig eingreift, können sie daran gehindert werden, relativ zueinander verdreht zu werden.

Bei dem Blockierelement kann es sich insbesondere um ein Kabel, vorzugsweise um das Kabel einer Kabelsicherung oder eines Kabelverriegelungssystems, handeln, so dass das Kabel dann zugleich dazu genutzt werden kann, die Sicherungsvorrichtung (wie weiter oben beschrieben) an einem feststehenden Objekt, z.B. einem Rohr in der Nähe des Ventilhebels, zu verankern. Beispielsweise kann hierzu ein Kabelverriegelungssystem genutzt werden, wie es in US 2015/0361691 A1 oder in US 9,388,606 B2 beschrieben wird. Zudem kann es sich bei dem Blockierelement grundsätzlich auch um den Bügel eines Hangschlosses handeln. Vorzugsweise handelt es sich dann um ein Hangschloss mit einem flexiblen Bügel, wie es beispielsweise in US 10,267,066 B2 oder DE 102018 117 023.8 beschrieben wird, da ein solcher flexibler Bügel in entsprechender Weise wie ein Kabel zur zusätzlichen Verankerung der Sicherungsvorrichtung an einem feststehenden Objekt genutzt werden kann. Sofern im Zusammenhang mit der Erfindung auf ein Kabel Bezug genommen wird, umfasst dieser Begriff generell ein flexibles längliches Element, insbesondere ein Drahtseil (mit Kunststoff ummantelt oder ohne Ummantelung) oder den genannten flexiblen Bügel eines Hangschlosses.

Die Blockieraufnahmen sind vorteilhafterweise dazu ausgebildet, von dem jeweiligen Blockierelement - sei es ein Kabel oder ein Bügel - durchgriffen zu werden. Das jeweilige Blockierelement muss dabei selbst nicht unbedingt Teil der Sicherungsvorrichtung sein. Vielmehr kann die Sicherungsvorrichtung zur Verwendung mit einem separaten Blockierelement, etwa mit einem bekannten Verriegelungssystem oder einem bekannten Hangschloss, ausgebildet sein.

Des Weiteren ist es bevorzugt, dass, wenn die Sicherungsvorrichtung den Ventilhebel zwischen den Klemmflächen einklemmt und eine Blockieraufnahme des Schraubelements mit einer Blockieraufnahme des Grundkörpers fluchtet, diese Blockieraufnahmen zumindest im Wesentlichen unmittelbar aneinander anliegen und in Richtung der Längsachse nicht voneinander beabstandet werden können. Auf diese Weise kann auch ein flexibles Blockierelement, wie etwa ein Kabel oder ein Bügel, wenn es in beide Blockieraufnahmen zugleich eingreift, zuverlässig verhindern, dass die beiden Blockieraufnahmen aus ihrer fluchtenden Anordnung heraus gegeneinander verdreht werden können, so dass das Schraubelement durch das Blockierelement in seiner eingestellten Drehstellung blockiert ist.

Grundsätzlich kann es ausreichen, wenn das Schraubelement und der Grundkörper jeweils lediglich eine einzige Blockieraufnahme aufweisen. Die Blockieraufnahme des Schraubelements und die Blockieraufnahme des Grundkörpers können dann in Drehstellungen des Schraubelements relativ zu dem Grundkörper miteinander fluchten, die sich voneinander jeweils durch eine oder mehrere vollständige Umdrehungen des Schraubelements unterscheiden. In diesen Drehstellungen, denen jeweils ein anderer Maximalabstand der Klemmflächen entspricht, kann das Schraubelement dann blockiert werden. Die Differenz zwischen den entsprechenden auf diese Weise festlegbaren Maximalabständen ergibt sich dabei aus der Ganghöhe des Gewindes und des Gegengewindes. Durch geringe Ganghöhen, z.B. durch die Verwendung eines Feingewindes, kann für ein präzises Einklemmen des Ventilhebels der Maximalabstand sehr fein eingestellt werden.

Zudem kann die Genauigkeit der Anpassung des Maximalabstands der Klemmflächen an die Maße eines jeweiligen Ventilhebels durch eine größere Anzahl an Blockieraufnahmen erhöht werden. Schon wenn lediglich entweder an dem Grundkörper oder an dem Schraubelement eine zweite Blockieraufnahme vorgesehen wird, die der ersten Blockieraufnahme bezüglich der Drehachse diametral entgegengesetzt angeordnet ist, kann jeweils nach einer halben Umdrehung eine dieser zwei Blockieraufnahmen mit der Blockieraufnahme des jeweils anderen Elements fluchten, so dass sich die festlegbaren Maximalabstände um nur noch eine halbe Gewindeganghöhe unterscheiden. Durch geeignete Wahl der Anzahl an Blockieraufnahmen und/oder der Gewindeganghöhe können die Unterschiede zwischen den festlegbaren Maximalabständen in den Bereich des ohnehin vorhandenen Spiels gebracht werden, so dass eine zumindest annähernd stufenlose Einstellung möglich ist. Auf diese Weise ist die Sicherungsvorrichtung besonders universell an verschiedenen Ventilhebeln verwendbar.

Des Weiteren ist erfindungsgemäß vorgesehen, dass der Grundkörper eine Schiene aufweist, die sich in Richtung der Längsachse erstreckt und in der ein Führungsabschnitt des Gleitstücks aufgenommen und geführt verschiebbar ist. Bei dieser Verschiebbarkeit handelt es sich um eine grundsätzliche Verschiebbarkeit des Gleitstücks relativ zu dem Grundkörper, die aber durch das Schraubelement beschränkt oder, während der Befestigung der Sicherungsvorrichtung an einem Ventilhebel, auch aufgehoben sein kann. Der Führungsabschnitt kann beispielsweise nach Art eines Nutensteins ausgebildet und in der Schiene geführt verschiebbar sein. Erfindungsgemäß ist dabei ferner vorgesehen, dass die Drehachse, um die das Schraubelement drehbar gelagert ist, durch die Schiene hindurch verläuft. Insbesondere kann sich das Schraubelement vollständig oder zumindest zu einem überwiegenden Teil innerhalb der Schiene erstrecken und ist dabei vorzugsweise parallel zur Längsachse ausgerichtet.

Gemäß einer vorteilhaften Ausführungsform umfasst die eine Klemmfläche eine Oberfläche aus aufgerautem Metall, während die andere Klemmfläche eine elastische, insbesondere dehnbare und/oder komprimierbare, Matte umfasst. Bei dem Metall kann es sich beispielsweise um einen, insbesondere gehärteten, Werkzeugstahl oder ein Hartmetall handeln. Die elastische Matte kann z.B. als Silikonmatte ausgebildet sein. Vorzugsweise weist die elastische Matte eine Shore-A-Härte im Bereich von 50° bis 70°, bevorzugt im Bereich von 55° bis 65°, insbesondere von etwa 60°, auf. Durch die unterschiedliche Ausbildung der beiden Klemmflächen können unterschiedliche Eigenschaften der beiden Klemmflächen, die jeweils für sich zu einem zuverlässigen Halt der Sicherungsvorrichtung an dem Ventilhebel beitragen, vorteilhaft kombiniert werden, um eine besonders zuverlässige Befestigung der Sicherungsvorrichtung an dem Ventilhebel zu erzielen.

Die Oberfläche der einen Klemmfläche kann insbesondere dadurch aufgeraut sein, dass das Metall geriffelt ist. Parallele Riefen der Riffelung können z.B. einen Abstand im Bereich von 2,2 mm bis 3,0 mm, insbesondere von 2,5 mm bis 2,7 mm, haben. Die Tiefe der Riefen kann etwa im Bereich von 1,0 mm bis 1,8 mm, vorzugsweise von 1,3 mm bis 1,5 mm, liegen. Für eine gute Anpassbarkeit der Klemmfläche an verschiedene Geometrien kann die Riffelung beispielsweise quadratisch sein. Die zwischen den Riefen ausgebildeten Strukturen können insbesondere zumindest im Wesentlichen pyramidenförmig ausgebildet sein.

Das Aufrauen bewirkt insbesondere eine Verstärkung der Reibung zwischen dem eingeklemmten Ventilhebel und der Klemmfläche, die einem Abziehen oder Abrutschen der Sicherungsvorrichtung von dem Ventilhebel in Richtung quer zur Längsachse vorteilhafterweise entgegenwirkt. Dieser Effekt kann besonders stark sein, wenn der Ventilhebel, beispielsweise durch Tauchlackierung, mit einer Beschichtung oder einem Überzug zur Verbesserung der Griffigkeit versehen ist. Eine solche Beschichtung, die z.B. ein Harz umfassen kann, oder ein Überzug ist typischerweise vergleichsweise dick, und elastisch komprimierbar, so dass die aufgeraute Oberfläche der einen Klemmfläche beim Festklemmen der Sicherungsvorrichtung an dem Ventilhebel an verschiedenen Stellen unterschiedlich tief in die Beschichtung eindrücken kann und die Sicherungsvorrichtung dadurch besonders zuverlässig vor einem Verrutschen geschützt werden kann.

Die an der anderen Klemmfläche vorgesehene elastische Matte kann eine flächige Form und/oder eine strukturierte Oberfläche aufweisen. Insbesondere kann die Matte an ihrer Oberfläche, mit der sie an einem jeweiligen zwischen den Klemmflächen eingeklemmten Ventilhebel anliegt, genoppt sein. Dabei können die Noppen regelmäßig über die Oberfläche verteilt angeordnet sein. Ferner kann die Oberfläche der elastischen Matte, auch von gegebenenfalls vorgesehenen Noppen abgesehen, konkav ausgebildet sein. Beispielsweise kann die Oberfläche nach innen gewölbt sein, so dass sie an zwei entgegengesetzten Rändern der Oberfläche dicker ist als in einem dazu parallelen Zwischenbereich. Insbesondere kann die Oberfläche die Form eines Zylindermantelabschnitts aufweisen, dessen Zylinderachse senkrecht zur Längsachse ausgerichtet ist. Wenn die Klemmfläche mit der elastischen Matte einen rechteckigen Umriss mit zwei längeren und zwei kürzeren Seiten aufweist, ist die Zylinderachse vorzugsweise parallel zu den beiden längeren Seiten ausgerichtet.

Zur Befestigung der Matte an dem Grundkörper bzw. an dem Gleitstück kann die Matte an einer der genannten Oberfläche entgegengesetzten Unterseite einen oder mehrere Verankerungsfortsätze aufweisen, die dazu ausgebildet sind, in entsprechende im Grundkörper bzw. im Gleitstück ausgebildete Aufnahmen eingesteckt zu werden, die durch einfachen Bohrungen gebildet sein können. Die Verankerungsfortsätze erstrecken sich vorzugsweise parallel zur Längsachse von der genannten Unterseite weg. Beispielsweise kann in vier Ecken einer zumindest im Wesentlichen rechteckigen Unterseite der Matte jeweils ein Verankerungsfortsatz vorgesehen sein. Die Unterseite kann aber auch eine andere Form aufweisen und die Verankerungsfortsätze können auch anders platziert sein. Grundsätzlich kann auch ein einzelner Verankerungsfortsatz ausreichen.

Die Verankerungsfortsätze können vorteilhafterweise im Wesentlichen rotationssymmetrisch zu einer in Längsrichtung ausgerichteten Symmetrieachse sein. Vorzugsweise weisen die Verankerungsfortsätze dabei einen konisch ausgebildeten Abschnitt auf, dessen Durchmesser mit zunehmendem Abstand von der Unterseite der Matte abnimmt. Der Minimaldurchmesser des konischen Abschnitts ist dabei zweckmäßigerweise kleiner als der Durchmesser der entsprechenden Aufnahme im Grundkörper bzw. im Gleitstück ausgebildet, so dass der Verankerungsfortsatz auf einfache Weise in die Aufnahme eindringen kann. In Richtung von der Unterseite der Matte weg kann sich an den konischen Abschnitt noch ein Endabschnitt mit konstantem Durchmesser anschließen, der dem Minimaldurchmesser des konischen Abschnitts entspricht und ein Einfädeln des Verankerungsfortsatzes in die entsprechende Aufnahme erleichtert.

Der Maximaldurchmesser des konischen Abschnitts dagegen ist vorzugsweise größer als der Durchmesser der entsprechenden Aufnahme ausgebildet. Dabei ist es ferner bevorzugt, wenn zwischen dem konischen Abschnitt und der Unterseite der Matte eine Einschnürung ausgebildet ist, deren Durchmesser gegenüber dem Maximaldurchmesser des konischen Abschnitts wieder verringert ist, insbesondere zumindest im Wesentlichen dem Durchmesser der entsprechenden Aufnahme entspricht. Dadurch kann ein Rand der Aufnahme in die Einschnürung eingreifen und den konischen Abschnitt dadurch hintergreifen, wenn der Verankerungsfortsatz vollständig in die entsprechende Aufnahme eingesteckt ist. Auf diese Weise wird ein zuverlässiger Halt der elastischen Matte an dem Grundkörper bzw. an dem Gleitstück erreicht.

Die Elastizität der Matte ermöglicht dabei, den konischen Abschnitt des Verankerungsfortsatzes in die entsprechende Aufnahme im Grundkörper bzw. im Gleitstück einzustecken, obwohl der konische Abschnitt zumindest teilweise einen größeren Durchmesser als diese Aufnahme aufweist. Um die lokale Verformbarkeit der elastischen Matte im Bereich des konischen Abschnitts noch zu erhöhen und dadurch für einen besonders zuverlässigen Halt der Matte am Grundkörper bzw. am Gleitstück einen möglichst großen Maximaldurchmesser des konischen Abschnitts zu ermöglichen, ist der Verankerungsfortsatz vorzugsweise zumindest teilweise, insbesondere über zumindest ein Dritte der Längserstreckung des Verankerungsfortsatzes, hohl ausgebildet. Der jeweilige Hohlraum kann dabei geschlossen sein. Vorzugsweise ist der Hohlraum jedoch nach außen offen, insbesondere erstreckt er sich bis zu einer von der Unterseite der Matte wegweisenden Stirnseite des Verankerungsfortsatzes, in die er mündet.

Die Matte kann insbesondere zumindest in Richtung einer Flächennormalen auf die Klemmfläche elastisch, insbesondere elastisch dehnbar und/oder komprimierbar sein. Die Matte umfasst vorzugsweise Silikon, kann aber auch aus Gummi oder aus einem sonstigen Elastomer bestehen. Durch die elastische Matte weist die Klemmfläche an ihrer Oberfläche somit eine Schicht auf, die sich zumindest in gewissem Maße an die äußere Form eines jeweiligen Ventilhebels anpassen kann. Das ermöglicht es, den Maximalabstand zwischen den Klemmflächen so zu verringern, dass der Ventilhebel zumindest teilweise in die elastische Matte hinein gedrückt wird. Die resultierende elastische Verformung der elastischen Matte sorgt dabei nicht nur dafür, dass sich die elastische Matte gut an die Form des Ventilhebels anpasst, sondern zugleich auch für einen vorteilhaften Anpressdruck, der zu einem zuverlässigen Halt der Sicherungsvorrichtung an dem Ventilhebel beiträgt.

Auch die aufgeraute Oberfläche der einen Klemmfläche kann grundsätzlich eine gewisse Elastizität aufweisen, die aber um eine oder mehrere Größenordnungen geringer als die Elastizität der elastischen Matte der anderen Klemmfläche ist.

Durch die Kombination derart unterschiedlich ausgebildeter Klemmflächen können somit auf verschiedenen Skalen vorteilhafte Effekte für ein zuverlässiges Einklemmen des Ventilhebels erzielt werden. Sofern der Ventilhebel, wie erläutert, mit einer elastischen Beschichtung oder einem elastischen Überzug versehen ist, erweist sich die eine Klemmfläche (Oberfläche aus aufgerautem Metall) als besonders wirksam, während im Falle eines im Wesentlichen inelastisch ausgebildeten Ventilhebels (etwa aus Metall ohne Beschichtung oder Überzug) die andere Klemmfläche (also mit elastischer Matte) für ein zuverlässiges Einklemmen des Ventilhebels sorgt. Die beschriebene Ausbildung der beiden Klemmflächen trägt somit zu einer besonders universellen Verwendbarkeit der Sicherungsvorrichtung an ganz unterschiedlichen Ventilhebeln bei.

Gemäß einer vorteilhaften Ausführungsform weist die Schiene im Querschnitt ein C-förmiges Profil auf. Das C-förmige Profil der Schiene kann den Führungsabschnitt des Gleitstücks an drei oder sogar vier Seiten umgreifen. Der Führungsabschnitt des Gleitstücks ist im Bereich der Schiene bevorzugt entsprechend komplementär zu dem C-förmigen Profil der Schiene ausgebildet, insbesondere mit einem T-förmigen Profil. Ein C-förmiges Profil verhindert vorteilhafterweise, dass der Führungsabschnitt die Schiene quer zur Längsachse verlassen kann. Die C-Form kann dabei durch gerade Abschnitte angenähert sein. Beispielsweise kann ein Zentralabschnitt vorgesehen sein, von dessen beiden Enden sich jeweils in dieselbe Richtung senkrecht zum Zentralabschnitt ein jeweiliger Randabschnitt erstreckt, wobei sich an den Enden dieser Randabschnitt jeweils ein Endabschnitt anschließt, und wobei die beiden Endabschnitte parallel zum Zentralabschnitt aufeinander zu weisend ausgerichtet sind. Insbesondere durch die Endabschnitte wird dann sichergestellt, dass der Führungsabschnitt innerhalb der Schiene ausschließlich entlang der Längsachse verschoben, jedoch nicht quer zur Längsachse, insbesondere nicht senkrecht zum Zentralabschnitt, aus der Schiene entnommen werden kann. Die Randabschnitte müssen nicht unbedingt parallel zueinander sein, sondern können, beispielsweise nach Art einer Schwalbenschwanzführung, auch schräg aufeinander zu laufen. Vorzugsweise ist das Profil zu einer zur Längsachse parallelen Ebene spiegelsymmetrisch.

Gemäß einer weiteren vorteilhaften Ausführungsform beträgt die Breite der Schiene zumindest 80%, vorzugsweise zumindest 90%, der Breite der Klemmfläche des Grundkörpers und/oder beträgt die Tiefe der Schiene zumindest 30%, vorzugsweise zumindest 50%, der Tiefe der Klemmfläche des Grundkörpers. Die Breite und die Tiefe sind dabei jeweils senkrecht zur Längsachse sowie zueinander definiert. Die Breite kann insbesondere der Erstreckung eines, beispielsweise des vorstehend erwähnten, Zentralabschnitts eines Profils der Schiene und/oder dem maximalen Abstand zweier entgegengesetzter, beispielsweise der beiden vorstehend erwähnten, Randabschnitte eines Profils der Schiene entsprechen. Dadurch dass sich die Schiene somit quer zur Längsachse über einen Großteil der Ausdehnung der Klemmfläche des Grundkörpers erstreckt, insbesondere in zumindest eine Richtung quer zur Längsachse (nämlich in Richtung der Breite) über nahezu die gesamte Erstreckung der Klemmfläche des Grundkörpers erstreckt, kann eine besonders zuverlässige verschiebbare Lagerung und Führung Gleitstücks an dem Grundkörper erzielt werden. Das Gleitstück ist auf diese Weise besonders wenig anfällig für ein Verkanten.

Gemäß einer weiteren vorteilhaften Ausführungsform sind die Klemmflächen zueinander parallel ausgerichtet. Auf diese Weise wird vermieden, dass ein zwischen den Klemmflächen eingeklemmter Ventilhebel durch die Klemmflächen selbst seitlich aus den Klemmflächen heraus gedrückt wird.

Dabei sind die Klemmflächen vorzugsweise senkrecht zur Längsachse ausgerichtet. Das hat den Vorteil, dass die Klemmflächen den Ventilhebel beim Einklemmen des Ventilhebels zwischen den Klemmflächen im Wesentlichen senkrecht zu den Klemmflächen beaufschlagen. Dadurch können resultierende Kräfte zuverlässig abgetragen werden, ohne dass auf die Klemmflächen selbst Kräfte quer zur Längsachse wirken.

Gemäß einer weiteren vorteilhaften Ausführungsform ist das Schraubelement nach Art einer Flügelschraube oder nach Art einer Flügelmutter ausgebildet. Wenn das Schraubelement als Flügelschraube ausgebildet ist, ist das Gewinde des Schraubelements vorzugsweise als Außengewinde an deren Schraubenschaft ausgebildet. Das genannte Gegengewinde des Gleitstücks kann dann als Innengewinde an einer Bohrung des Gleitstücks ausgebildet sein, in die die Flügelschraube mit ihrem Schraubenschaft eingeschraubt ist. Wenn das Schraubelement dagegen als Flügelmutter ausgebildet ist, ist das Gewinde des Schraubelements vorzugsweise als Innengewinde an einer sich durch die Flügelmutter hindurch erstreckenden Bohrung ausgebildet. Das Gleitstück kann dann einen Schraubenschaft aufweisen, der sich in Längsrichtung erstreckt und das genannte Gegengewinde als Außengewinde aufweist. In beiden Fällen kann der Schraubenschaft jeweils eine Bohrung des Grundkörpers durchgreifen.

Beispielsweise kann das Schraubelement einen Schraubenkopf mit einer länglichen Form aufweisen, deren Längserstreckung senkrecht, insbesondere zumindest im Wesentlichen radial, zu der Drehachse ausgerichtet ist, um die das Schraubelement drehbar ist. Wenn es sich bei dem Schraubelement um eine Flügelmutter handelt, kann der Schraubenkopf zumindest im Wesentlichen dem gesamten Schraubelement entsprechen. Wenn es sich bei dem Schraubelement um eine Flügelschraube handelt, kann das Schraubelement neben dem Schraubenkopf noch einen Schraubenschaft aufweisen. Die längliche Form ermöglicht eine gute Greifbarkeit und Kraftübertragung beim Drehen des Schraubelements aufgrund der Hebelwirkung bei Beaufschlagung radialer Endabschnitte der Form.

Gemäß einer vorteilhaften Weiterbildung der erfindungsgemäßen Sicherungsvorrichtung weist das Schraubelement einen Schraubenkopf mit zumindest einer Beaufschlagungsfläche auf, die parallel zu der Drehachse, um die das Schraubelement drehbar ist, ausgerichtet und dazu ausgebildet ist, von Hand in Umfangsrichtung um die Drehachse beaufschlagt zu werden, um das Schraubelement zu drehen. Eine senkrechte Beaufschlagung der Beaufschlagungsfläche kann dabei insbesondere zumindest im Wesentlichen tangential zur Drehachse erfolgen.

Besonders vorteilhaft ist es dabei, wenn die Beaufschlagungsfläche in einem von der genannten Drehachse beabstandeten radialen Endabschnitt eine Eingriffsmulde aufweist, um ein radiales Abrutschen eines die Beaufschlagungsfläche in dem genannten Endabschnitt in Umfangsrichtung beaufschlagenden Fingers des Benutzers, der dabei insbesondere in die Eingriffsmulde eingreift, von der Beaufschlagungsfläche zu verhindern.

Die Eingriffsmulde kann insbesondere einem konkav geformten Abschnitt der Beaufschlagungsfläche entsprechen. Beispielsweise kann die Beaufschlagungsfläche zur Ausbildung der Eingriffsmulde in dem radialen Endabschnitt um eine zu der Drehachse parallele und von der Drehachse beabstandete Achse konkav gewölbt sein. Der Krümmungsradius dieser Biegung beträgt dabei vorzugsweise zumindest 0,5 cm.

Gemäß einer Ausführungsform kann die Beaufschlagungsfläche im Bereich der Drehachse des Schraubelements radial zu der Drehachse ausgerichtet sein, wobei die Eingriffsmulde in dem radialen Endabschnitt ausgehend von der radialen Ausrichtung in Richtung einer tangentialen Ausrichtung gewölbt ist. Die Eingriffsmulde muss hierbei nicht vollständig tangential ausgerichtet sein; eine derartige Wölbung bzw. Krümmung kann jedoch bereits einen Anschlag bilden, der das erläuterte Abrutschen eines Fingers während der Drehbewegung hinreichend sicher verhindert.

Die Eingriffsmulde weist vorzugsweise einen oder mehrere Punkte auf, an denen die Flächennormale zumindest im Wesentlichen in Umfangsrichtung ausgerichtet ist, sowie einen oder mehrere Punkte auf, an denen die Flächennormale auch Anteile radial nach Innen aufweist, wobei die daraus resultierende Abweichung von einer Ausrichtung in Umfangsrichtung beispielsweise zumindest 20°, bevorzugt zumindest 30°, insbesondere zumindest 45° beträgt. Der Übergang der Ausrichtung der Flächennormalen dazwischen ist vorzugsweise kontinuierlich, so dass er keinen Knick aufweist. Die Eingriffsmulde weist vorteilhafterweise eine Größe auf, die ein Eingreifen mit einer Fingerspitze oder Fingerkuppe ermöglicht. Beispielsweise kann ein Durchmesser, z.B. ein mittlerer oder minimaler Durchmesser, der Eingriffsmulde zumindest 1 cm betragen. Der vorstehend genannte Übergang kann sich beispielsweise über eine Strecke von zumindest 0,5 cm erstrecken.

Aufgrund einer derartigen Eingriffsmulde kann das Schraubelement besonders sicher und schnell gedreht werden. Dies ist wichtig, da bei einer Sicherungsvorrichtung der hier in Rede stehenden Art der Finger des Benutzers nicht abrutschen und hierdurch etwa den zu sichernden Ventilhebel (oder einen in der Umgebung angeordneten Ventilhebel) versehentlich betätigen soll, und da im Hinblick auf unterschiedliche mögliche Dicken von zu sichernden Ventilhebeln mitunter relativ große Anpassungen des Abstands zwischen den Klemmflächen erforderlich sind.

Das Vorsehen einer Eingriffsmulde im radialen Endabschnitt der Beaufschlagungsfläche vereinfacht somit das Drehen des Schraubelements, da ein parallel zur Drehachse ausgerichteter Finger, z.B. ein Zeigefinger, die Beaufschlagungsfläche mit seiner Fingerspitze im Bereich der Eingriffsmulde im Umlaufrichtung beaufschlagen kann und dann für ein schnelles Drehen des Schraubelements mehrfach um die Drehachse bewegt werden kann. Dabei kann der Radius der Kreisbahn der Fingerspitze naturgemäß variieren und droht daher auch einmal versehentlich so groß zu werden, dass der Finger von der Beaufschlagungsfläche radial nach außen abrutscht. Durch die Eingriffsmulde, in welche die Fingerspitze eingreifen kann, kann diese Gefahr vermindert werden, da die Eingriffsmulde aufgrund ihrer konkaven Form einem Abrutschen nach radial außen einen zumindest teilweise nach radial innen weisenden Teilbereich entgegensetzen kann. So kann das Schraubelement auf besonders zuverlässige Weise zu zahlreichen schnellen Umdrehungen manuell angetrieben werden.

Gemäß einer vorteilhaften Weiterbildung sind die Blockieraufnahme des Schraubelements und die genannte Eingriffsmulde bezüglich der genannten Drehachse diametral entgegengesetzt zueinander angeordnet. Wenn der Schraubenkopf eine längliche Form aufweist, können die Blockieraufnahme und die Eingriffsmulde insbesondere an diametral zueinander entgegengesetzten Enden der Längserstreckung dieser länglichen Form angeordnet sein. Durch die diametrale Anordnung kann auf doppelte Weise die Hebelwirkung bezüglich der Drehachse ausgenutzt werden: zum einen für ein manuelles Drehen des Schraubelements durch Beaufschlagung des radialen Endabschnitts der Beaufschlagungsfläche, der die Eingriffsmulde aufweist, und zum anderen für ein zuverlässiges Blockieren des Schraubelements in einer Drehstellung, in der die Blockieraufnahme mit einer Blockieraufnahme des Grundkörpers fluchtet und in der diese beiden Blockieraufnahmen gemeinsam von einem Blockierelement durchgriffen werden.

Gemäß einer weiteren vorteilhaften Weiterbildung weist der Schraubenkopf zwei Beaufschlagungsflächen der genannten Art auf, die also jeweils parallel zur Drehachse ausgerichtet und dazu ausgebildet sind, von Hand in Umfangsrichtung beaufschlagt zu werden, um das Schraubelement zu drehen, und die jeweils in einem von der Drehachse beabstandeten radialen Endabschnitt eine Eingriffsmulde aufweisen, um ein radiales Abrutschen eines die jeweilig Beaufschlagungsfläche in dem jeweiligem Endabschnitt in Umfangsrichtung beaufschlagenden Fingers von der jeweiligen Beaufschlagungsfläche zu verhindern. Dabei sind die zwei Beaufschlagungsflächen vorzugsweise in entgegengesetzte Richtungen weisend ausgerichtet. Dadurch können sie von entgegengesetzten Seiten aus beaufschlagt werden, so dass je nach gewünschter Drehrichtung die eine oder die andere Beaufschlagungsfläche beaufschlagt werden kann und für ein kräftiges Verdrehen des Schraubelements der Schraubenkopf beidseitig, z.B. mit Daumen und Zeigefinger, fest gegriffen werden kann, um ein hohes Drehmoment für das Einklemmen des Ventilhebels zwischen den Klemmflächen zu erzielen.

Dabei ist es ferner bevorzugt, wenn die beiden Beaufschlagungsflächen spiegelsymmetrisch zueinander sind. Insbesondere können die Beaufschlagungsflächen zu einer die genannte Drehachse enthaltenden Spiegelebene symmetrisch sein. Grundsätzlich kann aber etwa auch eine Spiegelsymmetrie bezüglich der Drehachse vorliegen.

Wenn zwei Beaufschlagungsflächen vorgesehen sind, können diese gemäß einer weiteren vorteilhaften Weiterbildung die Seitenflächen eines Stegs bilden, der zwischen den Beaufschlagungsflächen ausgebildet ist und sich zumindest im Wesentlichen radial zur Drehachse, insbesondere entsprechend einer Längserstreckung des Schraubenkopfes, erstreckt. Ein solcher Steg kann gut beidseitig gegriffen werden und somit als Griff für ein Drehen des Schraubelements fungieren. Dabei ist es bevorzugt, dass ein radialer Endabschnitt des Stegs, der zwischen den genannten radialen Endabschnitten der Beaufschlagungsflächen ausgebildet ist, in Umfangsrichtung um die Drehachse beidseitig verbreitert ist. Dabei kann sich diese Verbreiterung insbesondere aus der Muldenform bzw. der konkaven Krümmung der Endabschnitte der Beaufschlagungsflächen ergeben. Ferner kann der Steg insbesondere derart verbreitert sein, dass er aus zur Drehachse paralleler Blickrichtung zumindest im Wesentlichen eine Y-Form oder eine T-Form aufweist. Die Verbreiterung entspricht dann dem Auseinanderlaufen der beiden oberen Schenkel der Y-Form bzw. der T-Form. Die Y-Form bzw. T-Form kann dabei einer exakten Form des Buchstabens Y oder des Buchstabens T lediglich angenähert sein. Insbesondere kann der Steg anstelle von Ecken gebogene Übergänge aufweisen.

Gemäß einer Ausführungsform kann das Schraubelement in einer Normalebene zu der Drehachse einen länglichen Umriss aufweisen, wobei der Steg an seinem dem verbreiterten Endabschnitt abgewandten Ende bis zu der Blockieraufnahme des Schraubelements reicht und wobei die Breite des länglichen Umrisses zumindest im Wesentlichen der Breite des verbreiterten Endabschnitts des Stegs entspricht. Hierdurch ist eine Form des Schraubelements gebildet, die zum einen aufgrund einer großen radialen Erstreckung in einer Längsrichtung - wie erläutert - das Aufbringen eines hohen Drehmoments für das Verdrehen des Schraubelements und somit für das Einklemmen des Ventilhebels zwischen den Klemmflächen und auch ein zuverlässiges Blockieren des Schraubelements mittels des Blockierelements ermöglicht; und die zum anderen in einer Querrichtung eine minimale Erstreckung aufweist, um in der blockierten Drehstellung des Schraubelements kein Hindernis für die Einbauumgebung der Sicherungsvorrichtung zu bilden und insbesondere nicht über den Grundkörper seitlich überzustehen.

Gemäß einer weiteren vorteilhaften Ausführungsform weist das Schraubelement einen Schraubenschaft, an dem das Gewinde ausgebildet ist, und einen gegenüber dem Schraubenschaft verbreiterten Schraubenkopf auf, der an einem Ende des Schraubenschafts unmittelbar an den Schraubenschaft angrenzen kann. Hierbei kann es sich insbesondere um den bereits genannten Schraubenkopf handeln. Der Schraubenkopf ist dabei insbesondere quer zur Längserstreckung des Schraubenschafts, die zur genannten Längsachse parallel ausgerichtet ist, gegenüber dem Schraubenschaft verbreitert, beispielsweise indem er einen größeren Durchmesser aufweist. Wenn das Schraubelement als Flügelschraube ausgebildet ist, kann der Schraubenkopf eine längliche Form aufweisen, deren Längserstreckung quer zur Längsachse ausgerichtet ist.

Ferner weist der Grundkörper eine Bohrung auf, die sich in Richtung der Längsachse erstreckt und die von dem Schraubenschaft des Schraubelements durchgriffen wird, wobei der Schraubenkopf auf einer Seite der Bohrung angeordnet ist, während das Gewinde des Schraubenschaftes auf der anderen, entgegengesetzten Seite der Bohrung mit dem Gegengewinde des Gleitstücks in Eingriff steht. Der Schraubenkopf ist dabei gegenüber dem Schraubenschaft derart verbreitert, dass er nicht durch die Bohrung passt. Daher kann die Klemmfläche des Gleitstücks, das mit dem Schraubelement über den Gewindeeingriff gekoppelt ist, nur so weit von der Klemmfläche des Grundelements weg bewegt werden, bis der Schraubenkopf auf der einen Seite der Bohrung an der Bohrung anliegt. Dadurch wird die Verschiebbarkeit des Gleitstücks relativ zu dem Grundkörper mittels des Schraubelements auf einen Maximalabstand zwischen den Klemmflächen beschränkt, der über den gegenseitigen Eingriff des Gewindes und des Gegengewindes von der Drehstellung des Schraubelements abhängt.

Die eine oder die gegebenenfalls mehreren Blockieraufnahmen des Schraubelements können insbesondere an dem Schraubenkopf ausgebildet sein.

Gemäß einer vorteilhaften Weiterbildung der vorstehenden Ausführungsform ist eine Sicherungsklammer vorgesehen, die den Schraubenschaft auf der genannten anderen Seite der Bohrung - d.h. derjenigen Seite der Bohrung, auf der das Gewinde des Schraubenschaftes mit dem Gegengewinde des Gleitstücks in Eingriff steht - zumindest teilweise umgreift und bezüglich der Längsachse am Schraubenschaft axial festgelegt ist. Die Sicherungsklammer kann den Schraubenschaft beispielsweise über mehr als einen Halbkreis, vorzugsweise über zumindest einen Dreiviertelkreis, jedoch weniger als einen vollen Kreis umgreifen. Ferner kann die Sicherungsklammer zumindest derart elastisch sein, dass sie quer zur Längsachse auf den Schraubenschaft aufgesteckt werden bzw. von diesem abgezogen werden kann. Eine solche Elastizität muss aber nicht zwingend vorgesehen sein, da die Sicherungsklammer auch axial entlang der Längsachse auf den Schraubenschaft aufgeschoben werden kann. Bei der Sicherungsklammer kann es sich beispielsweise um einen Sprengring handeln.

Eine solche Sicherungsklammer kann insbesondere dazu dienen, ein Lösen des Schraubelements von dem Grundkörper zu vermeiden, auch wenn das Gewinde des Schraubelements und das Gegengewinde des Gleitstücks voneinander gelöst wurden oder noch nicht miteinander in Eingriff gebracht wurden. Außerdem kann die Sicherungsklammer dazu dienen, die Klemmflächen vor dem Festklemmen der Sicherungsvorrichtung an dem Ventilhebel zunächst auf Abstand zu halten, um die Sicherungsvorrichtung leichter an dem Ventilhebel anordnen zu können, bevor die Klemmflächen anschließend durch Drehen des Schraubelements aufeinander zu bewegt werden und den Ventilhebel beidseitig klemmend beaufschlagen.

Die Erfindung wird nachfolgend lediglich beispielhaft anhand der Figuren weiter erläutert.
- Fig. 1 und 2: zeigen eine Ausführungsform einer erfindungsgemäßen Sicherungsvorrichtung in schematischer perspektivischer Darstellung aus zwei unterschiedlichen Blickwinkeln.
- Fig. 3 und 4: zeigen dieselbe Ausführungsform in einer schematischen Darstellung von vorne bzw. von der Seite.
- Fig. 5: zeigt dieselbe Ausführungsform in einer der Fig. 1 entsprechenden perspektivischen Darstellung, wobei die Hauptelemente der Sicherungsvorrichtung jedoch nach Art einer Explosionsdarstellung separat voneinander gezeigt sind.

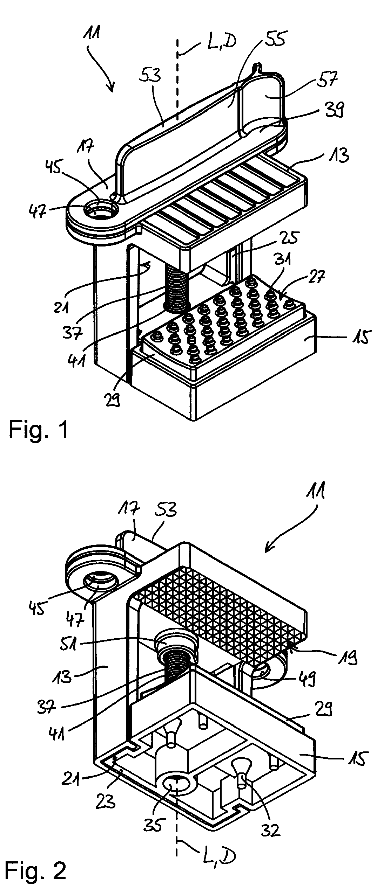

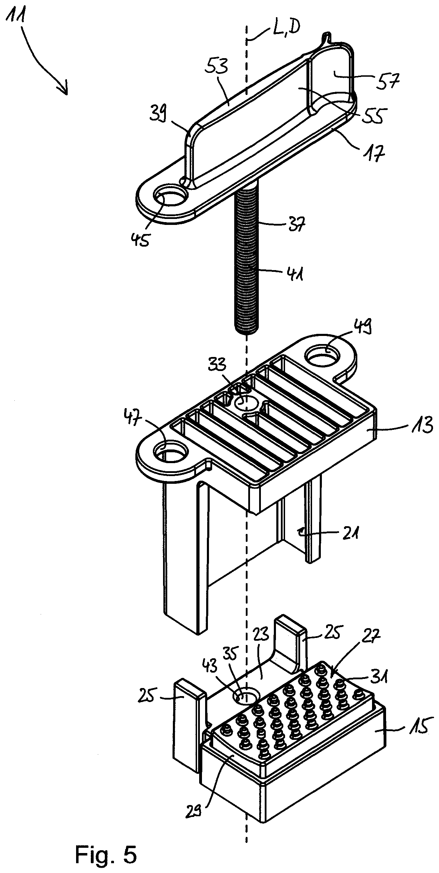

In den Figuren wird exemplarisch eine mögliche Ausführungsform einer erfindungsgemäßen Sicherungsvorrichtung 11 gezeigt. Die Sicherungsvorrichtung 11 umfasst einen Grundkörper 13, ein Gleitstück 15 sowie ein Schraubelement 17, die in den Fig. 1 bis 4 in funktionsfähiger Weise miteinander verbunden und in Fig. 5 separat voneinander gezeigt sind.

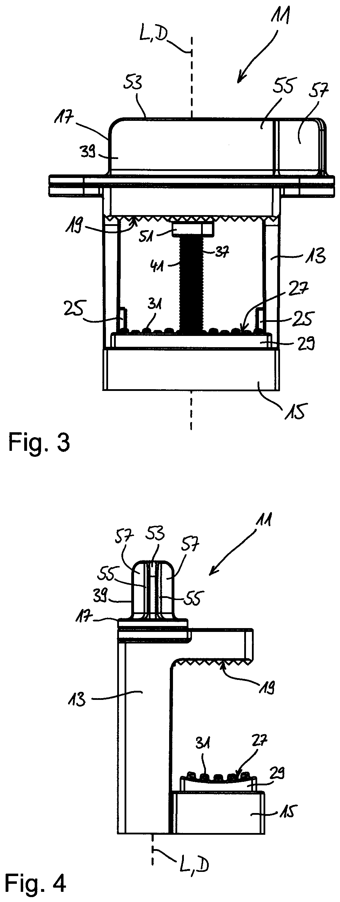

Wie insbesondere in der Seitenansicht der Fig. 4 zu erkennen ist, ist der Grundkörper 13 im Wesentlichen L-förmig ausgebildet. Einer der Schenkel der L-Form weist eine Klemmfläche 19 auf, die eine rechteckige Form aufweist und eine Oberfläche aus einem quadratisch geriffelten Metall umfasst (vgl. insbesondere Fig. 2).

Senkrecht zu dieser Klemmfläche 19 erstreckt sich entlang einer Längsachse L der andere Schenkel der L-Form, der im Querschnitt ein C-förmiges Profil aufweist, wie insbesondere in Fig. 5 zu erkennen ist. Die C-Form wird dabei durch fünf jeweils senkrecht gewinkelt zueinander aufeinanderfolgende, zumindest im Wesentlichen gerade Abschnitte gebildet, deren zentraler Abschnitt am längsten ist und deren Endabschnitte am kürzesten sind. Durch dieses Profil wird eine Schiene 21 gebildet, in die ein komplementär zu dem Profil ausgebildeter Führungsabschnitt 23 des Gleitstücks 15 aufgenommen und parallel zur Längsachse L geführt verschiebbar ist. Der Führungsabschnitt 23 des Gleitstücks 15 besitzt im Bereich der Schiene 21 ein T-förmiges Profil, wobei die genannten fünf Abschnitte des C-förmigen Profils der Schiene 21den Führungsabschnitt 23 des Gleitstücks 15 an vier Seiten umgreifen (an allen vier Seiten und somit an fünf Abschnitten des horizontalen "T"-Balkens).

Wie insbesondere in Fig. 5 zu erkennen ist, ist das Gleitstück 15 weitgehend flächig ausgebildet. Allerdings weist der Führungsabschnitt 23 zwei bezüglich der Längsachse L diametral entgegengesetzt angeordnete Führungsvorsprünge 25 auf, die einen zumindest im Wesentlichen rechteckigen Querschnitt aufweisen und in dieselbe Richtung, nämlich in Richtung der Klemmfläche 19, parallel zur Längsachse L von dem übrigen Gleitstück 15 vorstehen. Wenn der Führungsabschnitt 23 des Gleitstücks 15 in die Schiene 21 des Grundkörpers 13 aufgenommen ist, liegen die Führungsvorsprünge 25 an drei ihrer Seiten an einem jeweiligen zumindest im Wesentlichen geraden Abschnitt der Schiene 21 an, so dass die Führungsvorsprünge 25 jeweils an drei Seiten von der Schiene 21 umgeben werden. Dadurch wird ein Verkanten des Gleitstücks 15 in der Schiene 21 vermieden und eine zuverlässige Ausrichtung des Gleitstücks 15 relativ zu dem Grundkörper gewährleistet.

Das Gleitstück 15 weist eine Klemmfläche 27 auf, die parallel zu der Klemmfläche 19 des Grundkörpers 13 und somit wie diese senkrecht zur Längsachse L ausgerichtet ist. Die Klemmfläche 27 des Gleitstücks 15 weist eine rechteckige Form auf, die im Wesentlichen der rechteckigen Form der Klemmfläche 19 des Grundkörpers 13 entspricht. An der Klemmfläche 27 des Gleitstücks 15 ist eine elastische Matte, insbesondere Silikonmatte 29, vorgesehen, die eine regelmäßige Anordnung von Noppen 31 aufweist, welche von der ansonsten ebenen Oberfläche der Silikonmatte 29 vorstehen. Die Oberfläche der Silikonmatte 29, an der die Noppen 31 vorgesehen sind, ist konkav gewölbt und weist dadurch die Form eines Zylindermantelabschnitts auf. Die Zylinderachse dieser Form ist dabei parallel zu den beiden längeren Seiten der Rechteckform der Klemmfläche 27 ausgerichtet.

An einer der Oberfläche mit den Noppen 31 entgegengesetzten Unterseite weist die Silikonmatte 29 vier Verankerungsfortsätze 32 auf, die sich parallel zur Längsachse L von der Unterseite weg erstrecken. Die Verankerungsfortsätze 32 durchgreifen in dem Gleitstück 15 ausgebildete Aufnahmen derart, dass sie an der der Klemmfläche 27 entgegengesetzten Seite des Gleitstücks 15 aus den Aufnahmen heraus vorstehen (vgl. Fig. 2). Die Verankerungsfortsätze 32 sind im Wesentlichen als zylinderförmige Stifte ausgebildet, die jedoch in einem mittleren axialen Bereich ihrer Längserstreckung einen konischen Abschnitt aufweisen, in welchem sich der Durchmesser des jeweiligen Verankerungsfortsatzes 32 ausgehend von dem Durchmesser, den der Verankerungsfortsatz 32 in einem sich an den konischen Abschnitt in Richtung von der Unterseite der Silikonmatte 29 weg anschließenden Endabschnitt aufweist, in Richtung zur Unterseite hin vergrößert.

In Richtung zu der Unterseite der Silikonmatte 29 schließt sich an den konischen Abschnitt zudem ein Zwischenabschnitt mit konstantem Durchmesser an, der kleiner als der Maximaldurchmesser des konischen Abschnitts ist. Dadurch wird zwischen der Unterseite und dem konischen Abschnitt eine Einschnürung gebildet, wobei sich an dem Übergang zwischen dem konischen Abschnitt und der Einschnürung der Durchmesser des jeweiligen Verankerungsfortsatzes 32 sprunghaft vom Maximaldurchmesser des konischen Abschnitts auf den geringeren Durchmesser der Einschnürung verringert. Der Durchmesser der Einschnürung liegt dabei im Bereich zwischen dem Maximaldurchmesser und dem Minimaldurchmesser des konischen Abschnitts und entspricht im Wesentlichen dem Durchmesser der Aufnahme, in welcher der jeweilige Verankerungsfortsatz 32 eingesteckt ist. Auf diese Weise wird der konische Abschnitt, wenn der jeweilige Verankerungsfortsatz 32, wie in Fig. 2 gezeigt, vollständig in die jeweilige Aufnahme eingesteckt ist, vom Rand der Aufnahme hintergriffen, so dass die Silikonmatte 29 dadurch zuverlässig an dem Gleitstück 15 verankert ist.

Damit sich der konische Abschnitt des Verankerungsfortsatzes 32 für das Durchstecken durch die entsprechende Aufnahme des Gleitstücks 15 gut elastisch stauchen lässt, ist der Verankerungsfortsatz 32 zumindest teilweise hohl ausgebildet. Dabei erstreckt sich ein Hohlraum ausgehend von einer von der Unterseite der Silikonmatte 29 weg weisenden Stirnseite des jeweiligen Verankerungsfortsatzes 32 über zumindest ein Drittel der Längserstreckung des Verankerungsfortsatzes 32 in diesen hinein und erstreckt sich dabei vorzugweise bis über einen überwiegenden Teil des konischen Abschnitts, insbesondere bis zu dessen Maximaldurchmesser.

Die beiden Klemmflächen 19 und 27 sind mit ihren Flächennormalen auf einander zu weisend ausgerichtet und dabei bezüglich der Längsachse L hinsichtlich ihrer jeweiligen Rechteckform im Wesentlichen deckungsgleich angeordnet. Dadurch kann die Sicherungsvorrichtung 11 derart an einem Betätigungselement, wie insbesondere einem Ventilhebel, (nicht dargestellt) angeordnet werden, dass die Klemmflächen 19 und 27 das Betätigungselement beidseitig flankieren. Durch Verschieben des mit seinem Führungsabschnitt 23 in der Schiene 21 des Grundkörpers 13 geführten Gleitstücks 15 relativ zu dem Grundkörper 13 kann der Abstand zwischen den Klemmflächen 19 und 27 verändert werden, bis die Klemmflächen 19 und 27 beidseitig an dem Betätigungselement anliegen.

Der Grundkörper 13 und das Gleitstück 15 weisen jeweils eine Bohrung 33 bzw. 35 auf, die sich beide entlang der Längsachse L erstrecken und dadurch miteinander fluchten. Die Längsachse L verläuft dabei durch die Schiene 21.

Das Schraubelement 17 ist als Flügelschraube ausgebildet und umfasst einen Schraubenschaft 37 sowie einen gegenüber dem Schraubenschaft 37 verbreiterten, flügelartig länglichen Schraubenkopf 39. Der Schraubenschaft 37 weist ein als Außengewinde ausgebildetes Gewinde 41 auf und erstreckt sich durch die Bohrung 33 des Grundkörpers 13 hindurch und zumindest in die Bohrung 35 des Gleitstücks 15 hinein. Durch diese Anordnung ist das Schraubelement 17 an dem Grundkörper 13 um eine Drehachse D drehbar gelagert, die zu der Längsachse L identisch ist.

Die Bohrung 35 des Gleitstücks 15 weist ein als Innengewinde ausgebildetes Gegengewinde 43 auf (vgl. Fig. 5; nicht gesondert dargestellt), mit dem das Gewinde 41 des Schraubenschaftes 37 des Schraubelements 17 in Eingriff steht. Durch diesen Eingriff ist die Lage des Gleitstücks 15 relativ zu dem Schraubenkopf 39 entlang der Längsachse L festgelegt, kann aber durch Drehen des Schraubelements 17 verändert werden. Da das Schraubelement 17 die Bohrung 33 des Grundkörpers 13 durchgreift, wobei der Schraubenkopf 39 auf der einen Seite der Bohrung 33 angeordnet ist und der Gewindeeingriff zwischen dem Schraubenschaft 37 und dem Gleitstück 15 auf der anderen Seite der Bohrung 33 erfolgt, kann das Gleitstück 15 mit der Klemmfläche 27 nicht weiter von der Klemmfläche 19 des Grundkörpers 13 weg bewegt werden, als bis der Schraubenkopf 39 an der Bohrung 33 anliegt.

Dadurch wird der Abstand zwischen den Klemmflächen 19 und 27 auf einen Maximalabstand begrenzt, der von dem Abstand des Gleitstücks 15 relativ zu dem Schraubenkopf 39 und somit von der Drehstellung des Schraubelements 17 abhängig ist. Daher kann durch Drehen des Schraubelements 17 dieser Maximalabstand auf denjenigen Abstand verringert werden, in dem die beiden Klemmflächen 19 und 27 von entgegengesetzten Richtungen aus an dem zu sichernden Ventilhebel anliegen, wobei vorzugsweise auch vorhandenes Spiel und Elastizitäten der Klemmflächen 19 und 27, insbesondere der Silikonmatte 29 mit den Noppen 31, weitgehend sozusagen aufgebraucht werden. Da der Abstand der Klemmflächen 19 und 27 nicht über den Maximalabstand hinaus vergrößert werden kann, ist der Ventilhebel dann zwischen den Klemmflächen 19 und 27 eingeklemmt. Die beschriebene Ausbildung der Klemmflächen 19 und 27 sorgt dabei auch bei Ventilhebeln ganz unterschiedlicher Art jeweils für einen besonders zuverlässigen Halt.

Durch entgegengesetztes Drehen des Schraubelements 17 kann der Maximalabstand wieder vergrößert und die Sicherungsvorrichtung 11 somit wieder von dem jeweiligen Ventilhebel gelöst werden. Um ein versehentliches Lösen der Sicherungsvorrichtung 11 oder ein Lösen der Sicherungsvorrichtung 11 durch einen Unbefugten zu verhindern, weist der Schraubenkopf 39 an einem Ende seiner Längserstreckung quer zur Längsachse L eine Blockieraufnahme 45 in Form einer sich parallel zur Längsachse L durch eine Flanschfläche des Schraubenkopfes 39 hindurch erstreckenden Öse auf. Der Grundkörper 13 weist am Übergang zwischen den Schenkeln seiner L-Form zwei senkrecht zu beiden Schenkeln der L-Form in zueinander entgegengesetzte Richtung vorstehende laschenartige Flanschflächen auf, in denen ebenfalls jeweils eine Blockieraufnahme 47 und 49 in Form einer sich parallel zur Längsachse L durch die jeweilige Flanschfläche hindurch erstreckenden Öse ausgebildet ist.

In der in den Figuren dargestellten Drehstellung des Schraubelements 17 sowie in Drehstellungen, die sich davon durch vollständige Umdrehungen des Schraubelements 17 um die Längsachse L unterscheiden, fluchtet die Blockieraufnahme 45 des Schraubelements 17 mit der einen Blockieraufnahme 47 des Grundkörpers 13. In dazwischen liegenden Drehstellungen, die sich von den genannten Drehstellungen durch eine halbe Umdrehung des Schraubelements 17 unterscheiden, fluchtet die Blockieraufnahme 45 dagegen mit der anderen Blockieraufnahme 49 des Grundkörpers 13.

Wenn die Blockieraufnahme 45 des Schraubelements 17 mit einer der Blockieraufnahmen 47 und 49 des Grundkörpers 13 fluchtet, kann ein Kabel, insbesondere eines Kabelverriegelungssystems, oder der, bevorzugt flexible, Bügel eines Hangschlosses die jeweils fluchten Blockieraufnahmen 45 und 47 bzw. 45 und 49 durchgreifen und dadurch das Schraubelement 17 in der jeweiligen Drehstellung relativ zu dem Grundkörper 13 blockieren. Auf diese Weise kann die Sicherungsvorrichtung 11 in einem eingestellten Maximalabstand zwischen den Klemmflächen 19 und 27 verriegelt werden, so dass die Sicherungsvorrichtung 11 gegen ein Lösen von dem Ventilhebel gesichert ist.

In den Fig. 2 und 3 ist ferner eine Sicherungsklammer 51 der Sicherungsvorrichtung 11 zu erkennen, die den Schraubenschaft 37 auf der dem Schraubenkopf 39 entgegengesetzten Seite der Bohrung 33 teilweise umgreift. Dabei ist die Sicherungsklammer an ihrer in Fig. 3 nach rechts weisenden Seite durchbrochen, so dass sie quer zur Längsachse L auf den Schraubenschaft 37 aufgesteckt bzw. von dem Schraubenschaft 37 abgezogen werden kann. Die Sicherungsklammer 51 ist, zumindest reibschlüssig, vorzugsweise formschlüssig, an dem Schraubenschaft 37 axial festgelegt.

Die Sicherungsklammer 51 dient dazu zu verhindern, dass sich das Gleitstück 15 unkontrolliert mit seiner Klemmfläche 27 auf die Klemmfläche 19 des Grundkörpers 13 zu bewegt, solange das Schraubelement 17 nicht gedreht wird. Insofern beschränkt die Sicherungsklammer 51 den Abstand zwischen den Klemmflächen 19 und 27 auf einen Minimalabstand. Auf diese Weise wird die Sicherungsvorrichtung 11, bevor diese an einem jeweiligen Ventilhebel festgeklemmt wird, auf einfache Weise offengehalten. Zudem wird durch die Sicherungsklammer 51 das Schraubelement 17 an dem Grundkörper 13 gesichert, auch wenn sich das Schraubelement 17 durch herausschraubendes Drehen von dem Gleitstück 15 gelöst haben sollte. Dadurch kann das Schraubelement 17 nicht verloren gehen.

Der Schraubenkopf 39 weist einen Steg 53 auf, der dazu ausgebildet ist, zum Drehen des Schraubelements 17 von Hand gegriffen zu werden. Der Steg erstreckt sich entlang der Längserstreckung des Schraubenkopfes 39 von der Blockieraufnahme 45 bis zum entgegengesetzten radialen Ende der Längserstreckung. Dabei weist der Steg 53 als Seitenflächen zwei Beaufschlagungsflächen 55 auf, die parallel zur Drehachse D ausgerichtet sind und in entgegengesetzte Richtungen senkrecht zur Drehachse D und zur Längserstreckung des Schraubenkopfes 39 weisen. Die Beaufschlagungsflächen 55 sind dabei bezüglich einer Spiegelebene, die durch die Drehachse D und die Längserstreckung des Schraubenkopfes 39 aufgespannt wird, spiegelsymmetrisch.

Aus einer Blickrichtung parallel zur Drehachse D weist der Steg 53 eine Y-Form auf, wobei die auseinanderlaufenden oberen Schenkel der Y-Form in einem radialen Endabschnitt des Stegs 53 angeordnet sind, welcher zu der Blockieraufnahme 45 diametral entgegengesetzt ist. Das Auseinanderlaufen der Schenkel der Y-Form entspricht einer Verbreiterung des Stegs 53 in diesem radialen Endabschnitt, die sich aufgrund von Eingriffsmulden 57 ergibt, die jeweils in einem dem radialen Endabschnitt des Stegs 53 entsprechenden radialen Endabschnitt einer jeweiligen der beiden Beaufschlagungsflächen 55 ausgebildet sind. Diese Eingriffsmulden 57 sind jeweils dadurch gebildet, dass die jeweilige Beaufschlagungsfläche 55 in ihrem radialen Endabschnitt um eine zu der Drehachse D parallele und von der Drehachse D beabstandete Achse konkav gebogen ist. Dadurch sind die Beaufschlagungsflächen 55 im Bereich der jeweiligen Eingriffsmulde 57, je weiter radial außen, desto stärker so gewölbt bzw. gekrümmt, dass die jeweilige Flächennormale einen kontinuierlich zunehmenden Anteil nach radial innen aufweist. Die Eingriffsmulden 57 bilden somit relativ zu einer rein radialen Ausrichtung des Stegs 53 bzw. der Beaufschlagungsflächen 55 eine jeweilige tangentiale Erhebung bzw. einen Anschlag. Auf diese Weise kann sich ein in die jeweilige Eingriffsmulde 57 eingreifender Finger des Benutzers zumindest teilweise nach radial außen an der Eingriffsmulde 57 abstützen und rutscht somit weniger leicht nach radial außen von der jeweiligen Beaufschlagungsfläche 55 ab.

Je nach gewünschter Richtung, in die das Schraubelement 17 gedreht werden soll, kann die Fingerspitze eines parallel zur Drehachse D ausgerichteten Fingers eine der beiden Beaufschlagungsflächen 55 in deren radialem Endabschnitt in Umfangsrichtung beaufschlagen und greift dabei in die dort ausgebildete Eingriffsmulde 57 ein. Um mehrere schnelle Umdrehungen des Schraubelements 17 in kontinuierlicher Folge auszuführen, kann der Finger dann auf einer Kreisbahn um die Drehachse D bewegt werden. Durch das Eingreifen in die Eingriffsmulde 57 wird dabei die Gefahr, dass der Fingers radial nach außen von der Beaufschlagungsfläche 55 abrutscht, reduziert, da die Eingriffsmulde 57 aufgrund ihrer konkaven Ausbildung zumindest anteilig auch nach radial innen weisende Bereiche umfasst, die einem Abrutschen nach radial außen entgegenstehen. So kann auf einfache Weise das Schraubelement 17 besonders zuverlässig mehrfach schnell gedreht werden.

### Bezugszeichen

- 11: Sicherungsvorrichtung
- 13: Grundkörper
- 15: Gleitstück
- 17: Schraubelement
- 19: Klemmfläche
- 21: Schiene
- 23: Führungsabschnitt
- 25: Führungsvorsprung
- 27: Klemmfläche
- 29: Silikonmatte
- 31: Noppen
- 32: Verankerungsfortsatz
- 33: Bohrung
- 35: Bohrung
- 37: Schraubenschaft
- 39: Schraubenkopf
- 41: Gewinde
- 43: Gegengewinde
- 45: Blockieraufnahme
- 47: Blockieraufnahme
- 49: Blockieraufnahme
- 51: Sicherungsklammer
- 53: Steg
- 55: Beaufschlagungsfläche
- 57: Eingriffsmulde
- D: Drehachse
- L: Längsachse

## Patentansprüche

1. Sicherungsvorrichtung (11) zur Sicherung eines Ventilhebels in einer eingestellten Stellung,
mit einem Grundkörper (13), einem Gleitstück (15) und einem Schraubelement (17),
wobei der Grundkörper (13) und das Gleitstück (15) jeweils eine Klemmfläche (19, 27) aufweisen,
wobei das Gleitstück (15) an dem Grundkörper (13) entlang einer Längsachse (L) verschiebbar gelagert ist,
wobei das Schraubelement (17) an dem Grundkörper (13) drehbar gelagert ist und ein Gewinde (41) aufweist, das mit einem Gegengewinde (43) des Gleitstücks (15) in Eingriff steht, so dass dadurch die Lage des Gleitstücks (15) relativ zu dem Grundkörper (13) entlang der Längsachse (L) auf einen Maximalabstand zwischen den Klemmflächen (19, 27) beschränkt wird, der durch Drehen des Schraubelements (17) veränderbar ist, um den Ventilhebel zwischen den Klemmflächen (19, 27) einzuklemmen,
wobei je nach Drehstellung des Schraubelements (17) eine von gegebenenfalls mehreren am Schraubelement (17) ausgebildeten Blockieraufnahmen (45) mit einer von gegebenenfalls mehreren am Grundkörper (13) ausgebildeten Blockieraufnahmen (47, 49) fluchtet, so dass ein Blockierelement, insbesondere ein Kabel, in beide Blockieraufnahmen (45, 47) eingreifen kann, um das Schraubelement (17) in der entsprechenden Drehstellung zu blockieren,
**dadurch gekennzeichnet,**
**dass** der Grundkörper (13) eine Schiene (21) aufweist, die sich in Richtung der Längsachse (L) erstreckt und in der ein Führungsabschnitt (23) des Gleitstücks (15) aufgenommen und geführt verschiebbar ist, und
**dass** die Drehachse (D), um die das Schraubelement (17) drehbar gelagert ist, durch die Schiene (21) hindurch verläuft.

2. Sicherungsvorrichtung nach Anspruch 1,
wobei die eine Klemmfläche (19) eine Oberfläche aus aufgerautem, insbesondere geriffeltem, Metall umfasst und die andere Klemmfläche (27) eine elastische Matte (29) umfasst.

3. Sicherungsvorrichtung nach Anspruch 1 oder 2,
wobei die Schiene (21) im Querschnitt ein C-förmiges Profil aufweist; und/oder
wobei der Führungsabschnitt (23) im Querschnitt ein T-förmiges Profil aufweist;
und/oder
wobei die Breite der Schiene (21) zumindest 80%, vorzugsweise zumindest 90%, der Breite der Klemmfläche (19) des Grundkörpers (13) beträgt, und/oder
wobei die Tiefe der Schiene (21) zumindest 30%, vorzugsweise zumindest 50%, der Tiefe der Klemmfläche (19) des Grundkörpers (13) beträgt.

4. Sicherungsvorrichtung nach einem der vorstehenden Ansprüche,
wobei die Klemmflächen (19, 27) zueinander parallel ausgerichtet sind.

5. Sicherungsvorrichtung nach Anspruch 4,
wobei die Klemmflächen (19, 27) senkrecht zur Längsachse (L) ausgerichtet sind.

6. Sicherungsvorrichtung nach einem der vorstehenden Ansprüche,
wobei das Schraubelement (17) nach Art einer Flügelschraube oder nach Art einer Flügelmutter ausgebildet ist.

7. Sicherungsvorrichtung nach einem der vorstehenden Ansprüche,
wobei das Schraubelement (17) einen Schraubenkopf (39) mit zumindest einer Beaufschlagungsfläche (55) aufweist, die parallel zu der Drehachse (D), um die das Schraubelement (17) drehbar ist, ausgerichtet und dazu ausgebildet ist, von Hand in Umfangsrichtung um die Drehachse (D) beaufschlagt zu werden, um das Schraubelement (17) zu drehen,
und wobei die Beaufschlagungsfläche (55) in einem von der Drehachse (D) beabstandeten radialen Endabschnitt eine Eingriffsmulde (57) aufweist, um ein radiales Abrutschen eines die Beaufschlagungsfläche (55) in dem genannten Endabschnitt in Umfangsrichtung beaufschlagenden Fingers von der Beaufschlagungsfläche (55) zu verhindern.

8. Sicherungsvorrichtung nach Anspruch 7,
wobei die Beaufschlagungsfläche (55) zur Ausbildung der Eingriffsmulde (57) in dem radialen Endabschnitt um eine zu der Drehachse (D) parallele und von der Drehachse (D) beabstandete Achse konkav gewölbt ist; und/oder
wobei die Beaufschlagungsfläche (55) im Bereich der Drehachse (D) radial zu der Drehachse (D) ausgerichtet ist, wobei die Eingriffsmulde (57) in dem radialen Endabschnitt ausgehend von der radialen Ausrichtung in Richtung einer tangentialen Ausrichtung gewölbt ist.

9. Sicherungsvorrichtung nach Anspruch 7 oder 8,
wobei die Blockieraufnahme (45) des Schraubelements (17) und die Eingriffsmulde (57) bezüglich der Drehachse (D) diametral entgegengesetzt zueinander angeordnet sind.

10. Sicherungsvorrichtung nach zumindest einem der Ansprüche 7 bis 9,
wobei der Schraubenkopf (39) eine weitere Beaufschlagungsfläche (55) der genannten Art aufweist, wobei die eine Beaufschlagungsfläche (55) und die weitere Beaufschlagungsfläche (55) in zueinander entgegengesetzte Richtungen weisen, wobei auch die weitere Beaufschlagungsfläche (55) in einem von der Drehachse (D) beabstandeten radialen Endabschnitt eine Eingriffsmulde (57) aufweist.

11. Sicherungsvorrichtung nach Anspruch 10,
wobei die Beaufschlagungsflächen (55) die Seitenflächen eines Stegs (53) bilden, der zwischen den Beaufschlagungsflächen (55) ausgebildet ist und sich zumindest im Wesentlichen radial zur Drehachse D erstreckt,
wobei ein radialer Endabschnitt des Stegs (53), der zwischen den genannten radialen Endabschnitten der Beaufschlagungsflächen (55) ausgebildet ist, in Umfangsrichtung um die Drehachse (D) beidseitig verbreitert ist, insbesondere derart, dass der Steg (53) aus zur Drehachse (D) paralleler Blickrichtung eine Y-Form oder eine T-Form aufweist.

12. Sicherungsvorrichtung nach Anspruch 11,
wobei das Schraubelement (17) in einer Normalebene zu der Drehachse (D) einen länglichen Umriss aufweist, wobei der Steg (53) an einem dem verbreiterten Endabschnitt abgewandten Ende bis zu der Blockieraufnahme (45) des Schraubelements (17) reicht und wobei die Breite des länglichen Umrisses zumindest im Wesentlichen der Breite des verbreiterten Endabschnitts des Stegs (53) entspricht.

13. Sicherungsvorrichtung nach einem der vorstehenden Ansprüche,
wobei das Schraubelement (17) einen Schraubenschaft (37), an dem das Gewinde (41) ausgebildet ist, und einen gegenüber dem Schraubenschaft (37) verbreiterten Schraubenkopf (39) aufweist,
wobei der Grundkörper (13) eine Bohrung (33) aufweist, die sich in Richtung der Längsachse (L) erstreckt und die von dem Schraubenschaft (37) des Schraubelements (17) durchgriffen wird,
und wobei der Schraubenkopf (39) auf einer Seite der Bohrung (33) angeordnet ist, während das Gewinde (41) des Schraubenschaftes (37) auf der anderen Seite der Bohrung (33) mit dem Gegengewinde (43) des Gleitstücks (15) in Eingriff steht.

14. Sicherungsvorrichtung nach Anspruch 13,
wobei eine Sicherungsklammer (51) vorgesehen ist, die den Schraubenschaft (37) auf der genannten anderen Seite der Bohrung (33) zumindest teilweise umgreift und bezüglich der Längsachse (L) am Schraubenschaft (37) axial festgelegt ist.

## Claims

1. A securing apparatus (11) for securing a valve lever in a set position, comprising a base body (13); a sliding piece (15); and a screw element (17),
wherein the base body (13) and the sliding piece (15) each have a clamping surface (19, 27);
wherein the sliding piece (15) is displaceably supported at the base body (13) along a longitudinal axis (L);
wherein the screw element (17) is rotatably supported at the base body (13) and has a thread (41) which is in engagement with a mating thread (43) of the sliding piece (15) so that the position of the sliding piece (15) relative to the base body (13) along the longitudinal axis (L) is thereby restricted to a maximum spacing between the clamping surfaces (19, 27) that can be changed by rotating the screw element (17) in order to clamp the valve lever between the clamping surfaces (19, 27);
wherein, depending on a rotational position of the screw element (17), one of possibly a plurality of blocking receivers (45) formed at the screw element (17) is aligned with one of possibly a plurality of blocking receivers (47, 49) formed at the base body (13) so that a blocking element, in particular a cable, can engage into both blocking receivers (45, 47) in order to block the screw element (17) in the corresponding rotational position, **characterized in that**
the base body (13) has a rail (21) which extends in the direction of the longitudinal axis (L) and in which a guide section (23) of the sliding piece (15) is received and is displaceable in a guided manner; and
**in that** the axis of rotation (D) about which the screw element (17) is rotatably supported extends through the rail (21).

2. A securing apparatus in accordance with claim 1,
wherein the one clamping surface (19) comprises a surface composed of a roughened metal, in particular a grooved metal, and the other clamping surface (27) comprises an elastic mat (29).

3. A securing apparatus in accordance with claim 1 or claim 2,
wherein the rail (21) has a C-shaped section in cross-section;
and/or
wherein the guide section (23) has a T-shaped section in cross-section;
and/or
wherein the width of the rail (21) amounts to at least 80%, preferably at least 90%, of the width of the clamping surface (19) of the base body (13);
and/or
wherein the depth of the rail (21) amounts to at least 30%, preferably at least 50%, of the depth of the clamping surface (19) of the base body (13).

4. A securing apparatus in accordance with any one of the preceding claims, wherein the clamping surfaces (19, 27) are aligned in parallel with one another.

5. A securing apparatus in accordance with claim 4,
wherein the clamping surfaces (19, 27) are oriented perpendicular to the longitudinal axis (L).

6. A securing apparatus in accordance with any one of the preceding claims, wherein the screw element (17) is configured in the manner of a wing screw or in the manner of a wing nut.

7. A securing apparatus in accordance with any one of the preceding claims,
wherein the screw element (17) has a screw head (39) comprising at least one application surface (55) which is aligned in parallel with the axis of rotation (D) about which the screw element (17) is rotatable and which is configured to be acted on by hand in a peripheral direction about the axis of rotation (D) in order to rotate the screw element (17);
and wherein the application surface (55) has an engagement depression (57) in a radial end section spaced apart from the axis of rotation (D) in order to prevent a finger acting on the application surface (55) in said end section in the peripheral direction from radially slipping off the application surface (55).

8. A securing apparatus in accordance with claim 7,
wherein, to form the engagement depression (57) in the radial end section, the application surface (55) is concavely arched about an axis which is in parallel with the axis of rotation (D) and which is spaced apart from the axis of rotation (D);
and/or
wherein the application surface (55) is oriented radially to the axis of rotation (D) in the region of the axis of rotation (D), with the engagement depression (57) in the radial end section being arched, starting from the radial orientation, in the direction of a tangential orientation.

9. A securing apparatus in accordance with claim 7 or claim 8,
wherein the blocking receiver (45) of the screw element (17) and the engagement depression (57) are arranged diametrically opposite one another with respect to the axis of rotation (D).

10. A securing apparatus in accordance with at least one of the claims 7 to 9,
wherein the screw head (39) has a further application surface (55) of said kind; wherein the one application surface (55) and the further application surface (55) face in mutually opposite directions; and wherein the further application surface (55) also has an engagement depression (57) in a radial end section spaced apart from the axis of rotation (D).

11. A securing apparatus in accordance with claim 10,
wherein the application surfaces (55) form the side surfaces of a web (53) which is formed between the application surfaces (55) and which extends at least substantially radially to the axis of rotation D; and
wherein a radial end section of the web (53) that is formed between said radial end sections of the application surfaces (55) is widened at both sides in the peripheral direction about the axis of rotation (D), in particular such that the web (53) has a Y shape or a T shape from a direction of view in parallel with the axis of rotation (D).

12. A securing apparatus in accordance with claim 11,
wherein the screw element (17) has an elongate outline in a normal plane to the axis of rotation (D); wherein the web (53) extends at an end remote from the widened end section up to the blocking receiver (45) of the screw element (17); and wherein the width of the elongate outline corresponds at least substantially to the width of the widened end section of the web (53).

13. A securing apparatus in accordance with any one of the preceding claims,
wherein the screw element (17) has a screw shaft (37), at which the thread (41) is formed, and a screw head (39) which is widened with respect to the screw shaft (37);
wherein the base body (13) has a bore (33) which extends in the direction of the longitudinal axis (L) and which is engaged through by the screw shaft (37) of the screw element (17);
and wherein the screw head (39) is arranged at one side of the bore (33), whereas the thread (41) of the screw shaft (37) is in engagement with the mating thread (43) of the sliding piece (15) at the other side of the bore (33).

14. A securing apparatus in accordance with claim 13,
wherein a securing clamp (51) is provided which at least partly engages around the screw shaft (37) at said other side of the bore (33) and which is axially fixed to the screw shaft (37) with respect to the longitudinal axis (L).

## Revendications

1. Dispositif de blocage (11) pour bloquer un levier de vanne dans une position réglée,
comprenant un corps de base (13), une pièce coulissante (15) et un élément de vissage (17),
dans lequel
le corps de base (13) et la pièce coulissante (15) présentent chacun une surface de serrage (19, 27),
la pièce coulissante (15) est montée sur le corps de base (13) de manière à pouvoir coulisser le long d'un axe longitudinal (L),
l'élément de vissage (17) est monté de façon mobile en rotation sur le corps de base (13) et présente un filet (41) qui est en prise avec un contre-filet (43) de la pièce coulissante (15), de sorte que la position de la pièce coulissante (15) par rapport au corps de base (13) le long de l'axe longitudinal (L) est ainsi limitée à une distance maximale entre les surfaces de serrage (19, 27), qui peut être modifiée par rotation de l'élément de vissage (17), afin de serrer le levier de vanne entre les surfaces de serrage (19, 27),
en fonction de la position de rotation de l'élément de vissage (17), un de éventuellement plusieurs logements d'arrêt (45) formés sur l'élément de vissage (17) est en alignement avec un de éventuellement plusieurs logements d'arrêt (47, 49) formés sur le corps de base (13), de sorte qu'un élément d'arrêt, en particulier un câble, peut s'engager dans les deux logements d'arrêt (45, 47), afin d'arrêter l'élément de vissage (17) dans la position de rotation correspondante,
**caractérisé en ce que**
le corps de base (13) présente un rail (21) qui s'étend dans la direction de l'axe longitudinal (L) et dans lequel une portion de guidage (23) de la pièce coulissante (15) est reçue et peut coulisser de manière guidée, et l'axe de rotation (D) autour duquel l'élément de vissage (17) est monté de façon mobile en rotation traverse le rail (21).

2. Dispositif de blocage selon la revendication 1,
dans lequel l'une des surfaces de serrage (19) présente une surface en métal rugueux, en particulier cannelé, et l'autre surface de serrage (27) comprend un matelas élastique (29).

3. Dispositif de blocage selon la revendication 1 ou 2,
dans lequel le rail (21) présente en section transversale un profil en forme de C ;
et/ou
la portion de guidage (23) présente en section transversale un profil en forme de T ;
et/ou
la largeur du rail (21) est d'au moins 80 %, de préférence d'au moins 90 %, de la largeur de la surface de serrage (19) du corps de base (13),
et/ou
la profondeur du rail (21) est d'au moins 30 %, de préférence d'au moins 50 %, de la profondeur de la surface de serrage (19) du corps de base (13).

4. Dispositif de blocage selon l'une des revendications précédentes, dans lequel les surfaces de serrage (19, 27) sont orientées parallèlement l'une à l'autre.

5. Dispositif de blocage selon la revendication 4,
dans lequel les surfaces de serrage (19, 27) sont orientées perpendiculairement à l'axe longitudinal (L).

6. Dispositif de blocage selon l'une des revendications précédentes,
dans lequel l'élément de vissage (17) est réalisé à la manière d'une vis à oreilles ou à la manière d'un écrou à oreilles.

7. Dispositif de blocage selon l'une des revendications précédentes,
dans lequel l'élément de vissage (17) présente une tête de vis (39) ayant au moins une surface de sollicitation (55) qui est orientée parallèlement à l'axe de rotation (D) autour duquel l'élément de vissage (17) peut tourner, et qui est conçue pour être sollicitée à la main dans la direction circonférentielle autour de l'axe de rotation (D), afin de faire tourner l'élément de vissage (17),
et la surface de sollicitation (55) comporte, dans une portion d'extrémité radiale espacée de l'axe de rotation (D), une cavité d'engagement (57) pour empêcher un doigt, sollicitant en direction circonférentielle la surface de sollicitation (55) dans ladite portion d'extrémité, de glisser radialement de la surface de sollicitation (55).

8. Dispositif de blocage selon la revendication 7,
dans lequel la surface de sollicitation (55) est bombée concave autour d'un axe parallèle à l'axe de rotation (D) et espacé de l'axe de rotation (D), afin de former la cavité d'engagement (57) dans la portion d'extrémité radiale ; et/ou
dans la zone de l'axe de rotation (D), la surface de sollicitation (55) est orientée radialement par rapport à l'axe de rotation (D), la cavité d'engagement (57) dans la portion d'extrémité radiale étant bombée pour passer de l'orientation radiale à une orientation tangentielle.

9. Dispositif de blocage selon la revendication 7 ou 8,
dans lequel le logement d'arrêt (45) de l'élément de vissage (17) et la cavité d'engagement (57) sont disposés de manière diamétralement opposée l'un à l'autre par rapport à l'axe de rotation (D).

10. Dispositif de blocage selon l'une au moins des revendications 7 à 9,
dans lequel la tête de vis (39) présente une autre surface de sollicitation (55) du type précité, ladite une surface de sollicitation (55) et ladite autre surface de sollicitation (55) étant orientées dans des directions opposées l'une à l'autre, ladite autre surface de sollicitation (55) présentant également une cavité d'engagement (57) dans une portion d'extrémité radiale espacée de l'axe de rotation (D).

11. Dispositif de blocage selon la revendication 10,
dans lequel les surfaces de sollicitation (55) forment les surfaces latérales d'une barrette (53) qui est formée entre les surfaces de sollicitation (55) et qui s'étend au moins sensiblement radialement par rapport à l'axe de rotation D,
une portion d'extrémité radiale de la barrette (53), qui est formée entre lesdites portions d'extrémité radiales des surfaces de sollicitation (55), est élargie des deux côtés dans la direction circonférentielle autour de l'axe de rotation (D), en particulier de telle sorte que la barrette (53) présente une forme en Y ou une forme en T dans une direction d'observation parallèle à l'axe de rotation (D).

12. Dispositif de blocage selon la revendication 11,
dans lequel l'élément de vissage (17) présente un contour oblong dans un plan normal à l'axe de rotation (D), la barrette (53) s'étend, à une extrémité détournée de la portion d'extrémité élargie, jusqu'au logement d'arrêt (45) de l'élément de vissage (17), et la largeur du contour oblong correspond au moins sensiblement à la largeur de la portion d'extrémité élargie de la barrette (53).

13. Dispositif de blocage selon l'une des revendications précédentes,
dans lequel l'élément de vissage (17) présente une tige de vis (37) sur laquelle est formé le filet (41), et une tête de vis (39) élargie par rapport à la tige de vis (37),
le corps de base (13) présente un alésage (33) qui s'étend dans la direction de l'axe longitudinal (L) et qui est traversé par la tige de vis (37) de l'élément de vissage (17),
et la tête de vis (39) est disposée d'un côté de l'alésage (33), tandis que le filet (41) de la tige de vis (37) est en prise avec le contre-filet (43) de la pièce coulissante (15) de l'autre côté de l'alésage (33).

14. Dispositif de blocage selon la revendication 13,
dans lequel il est prévu une pince de blocage (51) qui entoure au moins partiellement la tige de vis (37) sur ledit autre côté de l'alésage (33) et qui est fixée à la tige de vis (37) axialement par rapport à l'axe longitudinal (L).
